# EUROPEAN PATENT APPLICATION

(11) **EP 4 177 703 A1**
(43) Date of publication of application: **10.05.2023**
(21) Application number: 21206822.5
(22) Date of filing: 07.11.2021
(51) Int. Cl.: G06F 1/16, G07G 1/00, G07G 1/12

(54) **FOLDABLE SALES TERMINAL**

(71) Applicant: EBN Technology Corp., 221 New Taipei City (TW)
(72) Inventor: LIU, TZE-YANG, 221 New Taipei City (TW)
(74) Representative: Cabinet Chaillot

(57) **Abstract**

A foldable sales terminal is provided, which includes at least one sale operation interface(1) and a mainframe module(2). The sale operation interface(1) is a flat panel, and the outward surface thereof is provided with a touch display panel(ll). The sale operation interface(1) is connected to the mainframe module(2) via a pivot connection portion(3). The mainframe module(2) is provided with a mainboard(20) disposed therein and one side, away from the pivot connection portion(3), of the mainframe module(2) has an output/input connection port(21), so that the sale operation interface(1) and the mainframe module(2) can rotate relative to each other to change the angle therebetween, allow the sale operation interface(1) fold to cover inward the mainframe or open outwards far away from the mainframe. The design is simple and effective, such that the sales terminal can be folded to reduce the volume thereof for conveniently packaging, storing, carrying, and transporting the sales terminal.

## Description

### Field of the Invention

The present invention relates to a sales terminal, and in particular to a foldable sales terminal.

### The Prior Arts

Sales terminals can make the checking out process fast, correct, and can be automatically managed by computers. Thus, users can conveniently know the sales situation of each product so as to save manpower, reduce inventory costs, and effectively plan and implement perfect marketing strategies. Sales terminals has been widely used in various transaction occasions, such as retail stores, supermarkets, convenience stores, department stores, catering services, entertainment services, etc.

A traditional sales terminal included a mainframe, a keyboard, and a display screen, so the volume thereof is huge, and very inconvenient in practical application. Besides, the product function expansibility is low, which could not meet the needs of various customers.

At present, the more advanced and new generation of scientific and technological products have adopted the tablet computer installed on the bracket as a sales terminal. The volumes of these products can be greatly reduced, so the functions of these products can be more practical. However, the bracket of the aforementioned sales terminal adopting the tablet computer can provide only the support function; the mainframe, the hard disk and the related expansion accessories thereof are integrated in the tablet computer. The structural planning of each part thereof is still imperfect, which cannot meet practical needs of the diversified development of today's consumer market, the variety of sales counters having different sizes and the different decoration settings.

### SUMMARY OF THE INVENTION

In view of foregoing, one embodiment of this disclosure is to provide a foldable sales terminal, which includes at least one sale operation interface and a mainframe module.

The sale operation interface is a flat panel, and the outward surface thereof is provided with a touch display panel. One side of the sale operation interface is connected to the mainframe module via a pivot connection portion, so that the sale operation interface and the mainframe module can rotate relative to each other to change the angle therebetween so as to allow the sale operation interface fold to cover inward the mainframe or open outwards far away from the mainframe.

The mainframe module has a mainboard disposed therein and electrically connected to the touch display panel. One side, away from the pivot connection portion, of the mainframe module is provided with an output/input connection port.

In one embodiment, the lower portion of the mainframe module can be further installed with different expansion equipment, such as, but not limited to, a heat sink metal shell, a cashier having a thermal printer, a vertical information workstation, etc.

In one embodiment, the expansion equipment is a heat sink metal shell having an accommodating groove for the mainframe module to be placed therein, a cable outlet is located on one side of the accommodating groove and corresponds to the output / input connection port for allowing cables to pass through and out the cable outlet.

In this way, the sale operation interface and the mainframe module can rotate relative to each other to change the angle therebetween so as to fold or unfold the sales terminal. The above structural design is simple and effective, such that the sales terminal can be folded to reduce the volume thereof for conveniently packaging, storing, carrying, and transporting the sales terminal. The user can directly install the foldable sales terminal on the wall. Alternatively, the user can install different expansion equipment on the lower portion of the foldable sales terminal in order to satisfy the requirements of different stores.

### BRIEF DESCRIPTION OF THE DRAWINGS

FIG. 1 is a 3-dimension (3D) assembled view of a foldable sales terminal in accordance with one embodiment of the present disclosure.
FIG. 2 is an exploded view of the foldable sales terminal with a heat sink metal shell in accordance with one embodiment of the present disclosure.
FIG. 3 is a 3D assembled view of the foldable sales terminal with the heat sink metal shell in accordance with one embodiment of the present disclosure.
FIG.4 is a 3D assembled view of the foldable sales terminal, in folded state, with the heat sink metal shell in accordance with one embodiment of the present disclosure.
FIG. 5 is a section view of the foldable sales terminal with the heat sink metal shell in accordance with one embodiment of the present disclosure.
FIG. 6 is a schematic view of the foldable sales terminal installed with an auxiliary support frame in accordance with one embodiment of the present disclosure.
FIG.7A-7B are schematic views of the foldable sales terminal hanging on a wall in accordance with one embodiment of the present disclosure.
FIG.8A-8B are schematic views of the foldable sales terminal installed with a cash register having a printer in accordance with one embodiment of the present disclosure.
FIG. 9A-9B are schematic views of the foldable sales terminal installed with a vertical information workstation in accordance with one embodiment of the present disclosure.

### DETAILED DESCRIPTION OF THE PREFERRED EMBODIMENT

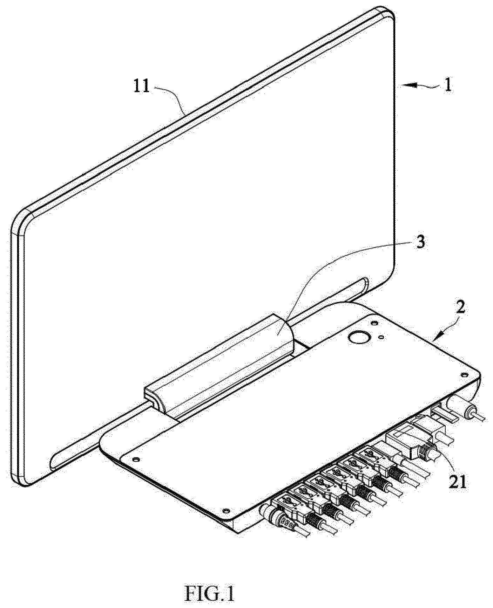

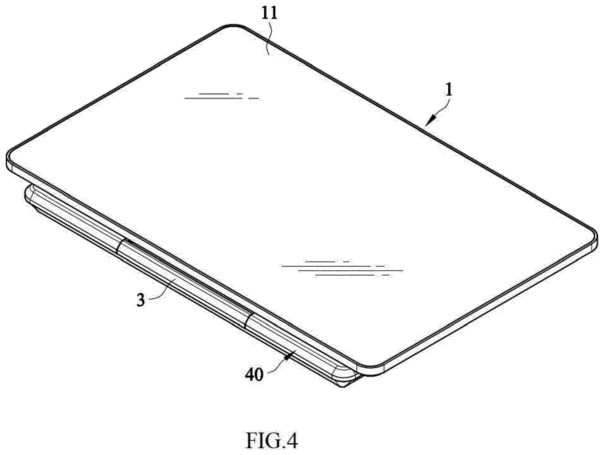

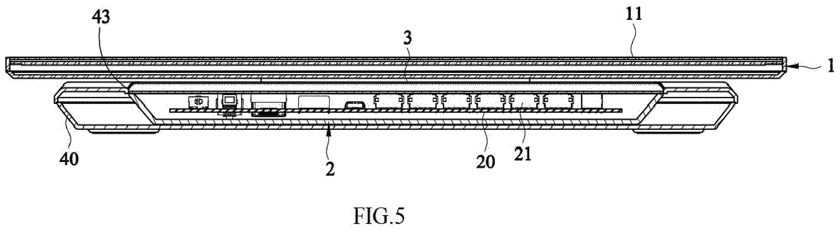

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. Please refer to Fig. 1 to Fig. 5, which show the structure of a foldable sales terminal in accordance with one embodiment of the present disclosure. The foldable sales terminal includes at least one sale operation interface 1 and a mainframe module 2.

The sale operation interface 1 is a flat panel and the outward surface thereof is provided with a touch display panel 11. A pivot connection portion 3 is disposed between one side of the sale operation interface 1 and the mainframe module 2 in order to connect the sale operation interface 1 to the mainframe module 2. In this way, the sale operation interface 1 and the mainframe module 2 can rotate relative to each other to change the angle therebetween, such that the user can fold to cover inward or open outwards.

The mainframe module 2 has a mainboard 20 electrically connected to the touch display panel 11 and one side, away from the pivot connection portion 3, of the mainframe module 2 is provided with an output/input connection port 21.

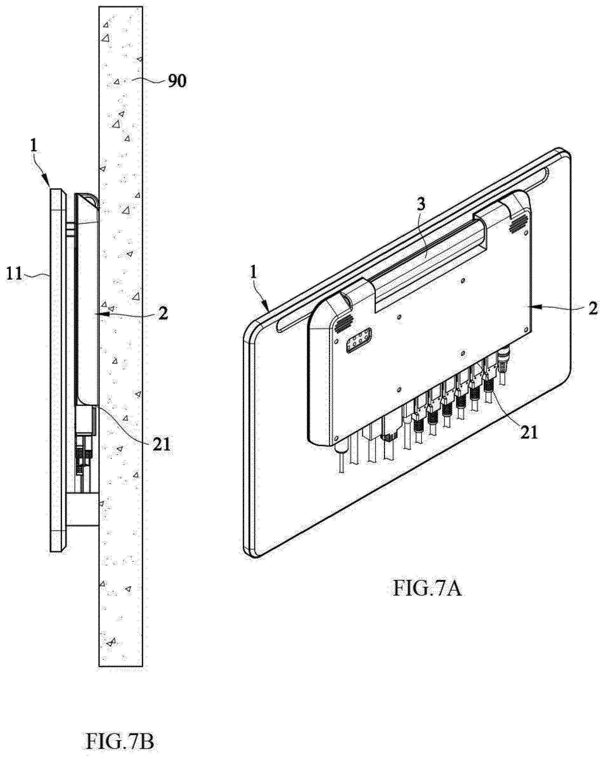

In one embodiment, as shown in Figs. 7A-7B, the size of the sale operation interface 1 is larger than that of the mainframe module 2, so the sale operation interface 1 and the mainframe module 2 can be folded and directly installed on a wall 90.

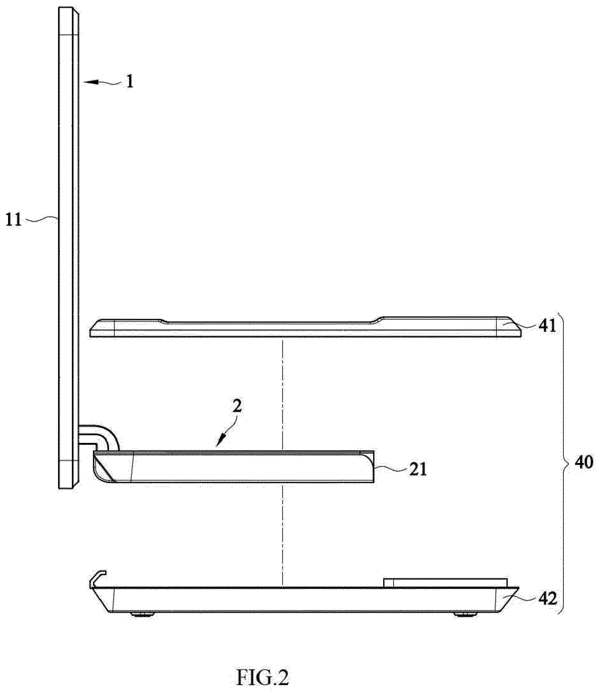

In one embodiment, as shown in Fig. 2, Fig. 3, Figs. 8A-8B, and Figs. 9A-9B, the mainframe module 2 can be further combined with different expansion equipment. The expansion equipment may be, but not limited to, a heat sink metal shell 40, a thermal printer 51, a cashier 50, a vertical information workstation 60, etc.

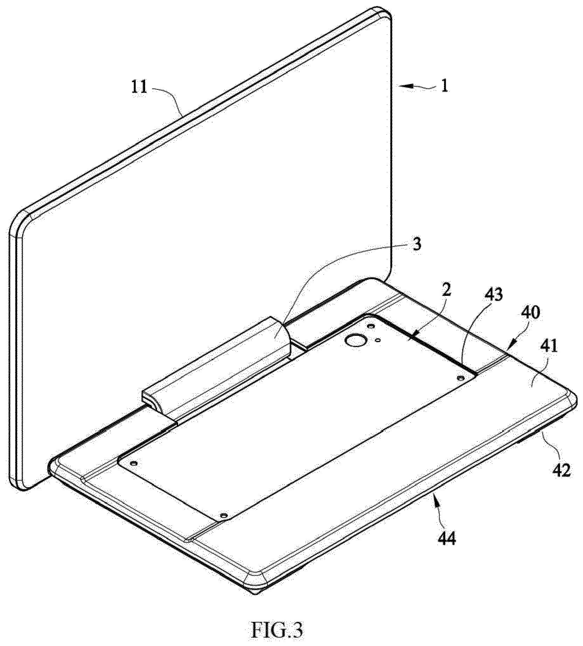

In one embodiment, as shown in Fig. 2 and Fig. 3, the expansion equipment may be a heat sink metal shell 40, which includes an upper shell 41 and a lower shell 42, and the upper shell 41 can be put on the lower shell 42 to combine them with each other. The heat sink metal shell 40 has an accommodating groove 43 for the mainframe module2 to be disposed therein. One side of the accommodating groove 43 is provided with a cable outlet 44 for a cable connected to the output / input connection port 21 to pass through. The heat sink metal shell 40 is of a fanless cooling structure for natural convection cooling and the size thereof is substantially the same with that of the sale operation interface 1. Therefore, the combination of the heat sink metal shell 40 and the sale operation interface 1 adopts the laptop configuration.

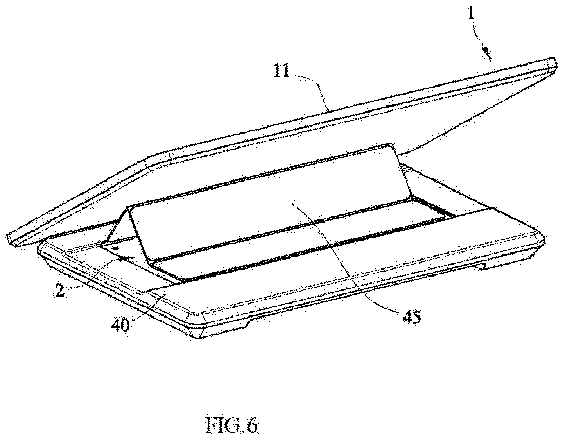

In one embodiment, as shown in Fig. 6, an auxiliary support frame 45 for active folding can be disposed between the heat sink metal shell 40 and the sale operation interface 1. The appearance of the auxiliary support frame 45 shown in Fig. 6 is just for example instead of a limitation. The major function of the auxiliary support frame 45 is to more stably support the rear side of the sale operation interface 1 when the sales terminal is unfolded, so that the user can more conveniently use the sales terminal to normally manage all transactions with customers according to the click.

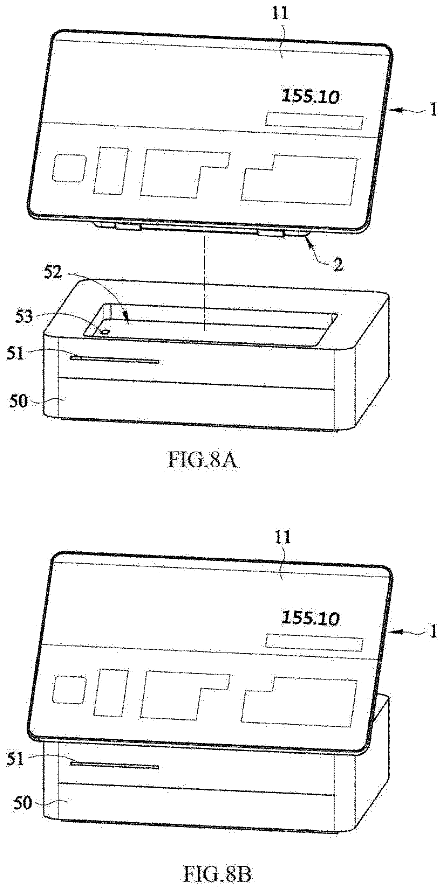

In one embodiment, as shown in Figs. 8A-8B, the expansion equipment may be a cashier 50 with a thermal printer 51, the cashier 50 has an accommodating groove 52 and an electrical connection portion 53, and the mainframe module2 can be placed in the accommodating groove 52 to connect to a corresponding connection point (not shown in the drawings) so as to electrically connect to the electrical connection portion 53.

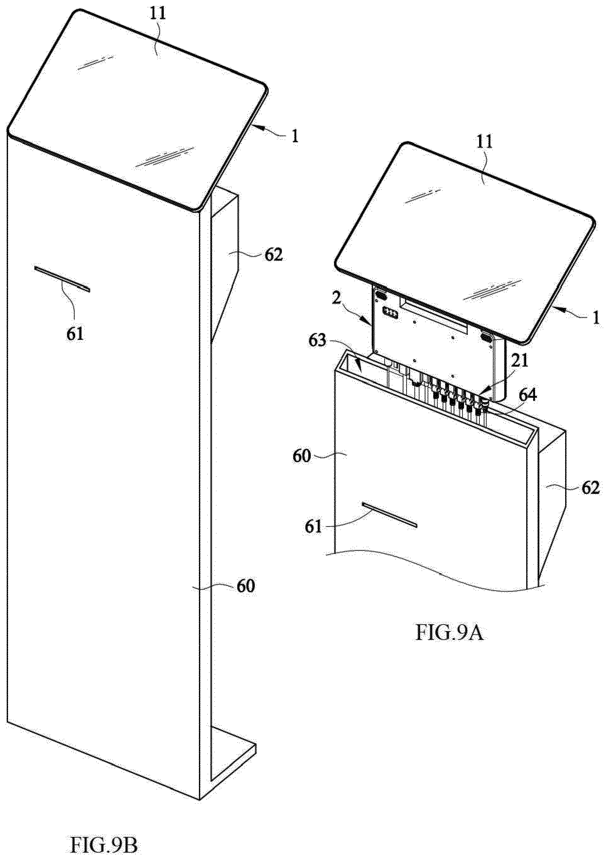

In one embodiment, as shown in Figs. 9A-9B, the expansion equipment may be a vertical information workstation 60. The main body of the expansion equipment has a thermal printer 61 and a wireless communication module 62, a slot 63 and a connection cable 64. The mainframe module 2 can be inserted into the slot 63 to achieve the electrical connection between the mainframe module 2 and the expansion equipment.

Therefore, the foldable sales terminal according to the embodiments of the present disclosure has a new combination structure, just like a laptop computer. The sale operation interface is connected to the mainframe module 2 via the pivot connection portion 3, such that the sale operation interface 1 and the mainframe module 2 can rotate relative to each other to change the angle therebetween so as to fold or unfold the sales terminal. The above structural design is simple and effective, such that the sales terminal can be folded to reduce the volume thereof for conveniently packaging, storing, carrying, and transporting the sales terminal. The user can directly install the foldable sales terminal on the wall 90. Alternatively, the user can install different expansion equipment on the lower portion of the foldable sales terminal, such as a heat sink metal shell 40, a cash register 50 having a thermal printer 51 or a vertical information workstation 60, in order to satisfy the requirements of different stores.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A foldable sales terminal, comprising:
at least one sale operation interface (1); and
a mainframe module (2);
wherein the sale operation interface (1) is a flat panel and an outward surface thereof is provided with a touch display panel (11), and one side of the sale operation interface (1) is connected to the mainframe module (2) via a pivot connection portion (3), whereby the sale operation interface (1) and the mainframe module (2) is able to rotate relative to each other to change an angle therebetween to allow the sale operation interface (1) fold to cover inward the mainframe or open outwards far away from the mainframe , wherein the mainframe module (2) has a mainboard (20) electrically connected to the touch display panel (11), and one side, away from the pivot connection portion (3), of the mainframe module (2) has an output/input connection port (21).

2. The foldable sales terminal as claimed in claim 1, wherein a size of the sale operation interface (1) is larger than a size of the mainframe module (2), and the sale operation interface (1) is able to be folded onto the mainframe module (2) in order to be directly installed on a wall.

3. The foldable sales terminal as claimed in claim 1, wherein a lower portion of the mainframe module (2) is further installed with an expansion equipment and the expansion equipment is a heat sink metal shell (40) composed of an upper shell (41) and a lower shell (42) being covered each other, wherein the heat sink metal shell (40) has an accommodating groove (43) for the mainframe module (2) to be placed therein , a cable outlet (44) is located on one side of the accommodating groove (43), and corresponds to the output / input connection port (21) for allowing cables to pass through and out the cable outlet (44).

4. The foldable sales terminal as claimed in claim 1, wherein a lower portion of the mainframe module (2) is further installed with an expansion equipment and the expansion equipment is a cash register (50) with a thermal printer (51), wherein the expansion equipment has an accommodating groove (52) and an electrical connection portion (53), and the mainframe module (2) is placed in the accommodating groove (52) and electrically connected to the electrical connection portion (53).

5. The foldable sales terminal as claimed in claim 1, wherein a lower portion of the mainframe module (2) is further installed with an expansion equipment and the expansion equipment is a vertical information workstation (60), wherein a main body of the expansion equipment has a thermal printer (61), a wireless communication module, a slot and a connection cable, and the mainframe module (2) is inserted into the slot and electrically connected to the connection cable.

6. The foldable sales terminal as claimed in claim 3, wherein the heat sink metal shell (40) is of a fanless cooling structure for natural convection cooling, and a combination of the heat sink metal shell (40) and the sale operation interface (1) adopts a laptop configuration.

7. The foldable sales terminal as claimed in claim 6, wherein an auxiliary support frame (45) for active folding is disposed between the heat sink metal shell (40) and the sale operation interface (1).
